(19) **Europäisches Patentamt European Patent Office Office européen des brevets**

(11) **EP 4 751 879 A1**

(12) **EUROPEAN PATENT APPLICATION**
published in accordance with Art. 153(4) EPC

(43) Date of publication:
03.06.2026 Bulletin 2026/23

(21) Application number: 24845116.3

(22) Date of filing: 08.04.2024

(51) International Patent Classification (IPC):
B29C 55/14 (2006.01)          B29C 48/08 (2019.01)
B29C 48/92 (2019.01)

(52) Cooperative Patent Classification (CPC):
B29C 48/08; B29C 48/92; B29C 55/14

(86) International application number:
PCT/JP2024/014219

(87) International publication number:
WO 2025/022731 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 JP 2023120957

(71) Applicant: The Japan Steel Works, Ltd.
Tokyo 141-0032 (JP)

(72) Inventors:
• FUKUSHI, Yusuke
Tokyo 141-0032 (JP)
• OCHIIWA, Takashi
Tokyo 141-0032 (JP)

(74) Representative: Simmons & Simmons LLP
(Munich)
Lehel Carré
Gewürzmühlstraße 11
80538 Munich (DE)

(54) **MOLDING CONDITION PARAMETER ESTIMATION METHOD, COMPUTER PROGRAM, ESTIMATION DEVICE, AND ESTIMATION SYSTEM**

(57)    Provided is a molding condition parameter estimation method capable of appropriately adjusting molding condition parameters of a film molding machine. The molding condition parameter estimation method comprises: acquiring detection data pertaining to the state of a film molding machine, said data being detected by a detector; and inputting the acquired detection data into an estimation model that estimates, upon input of the detection data pertaining to the state of the film molding machine, molding condition parameters for the film molding machine, and thereby estimating molding condition parameters for the film molding machine.

FIG.1

## Description

Technical Field

The present invention relates to a method for estimating molding condition parameters, a computer program, an estimation device and an estimation system.

Background Art

Molding machines for molding resin materials by a molding method such as injection molding, extrusion molding or the like have conventionally been in widespread use. In the molding machines, setting values of items for various molding conditions in the molding machine need to be so adjusted as to satisfy specifications required for a molded product. The adjustment of these molding conditions is performed based on the operator's experience and requires repeated trial and error to obtain appropriate molding conditions. Hence, techniques to assist the operator in adjusting molding condition parameters have been proposed.

Patent Document 1 discloses, for example, an injection molding machine system capable of appropriately adjusting molding condition parameters for an injection molding machine with a machine learner that is trained with reinforcement learning.

Citation List

Patent Literature

Patent Literature 1: Japanese Patent Application Laid-Open Publication No. 2017-30152

Summary of Invention

Technical Problems

The technique described in Patent Literature 1 is a technique related to an injection molding machine, but is not a technique aimed at estimating molding condition parameters of a film molding machine that forms films by extrusion molding. Difference in the machine configuration between the injection molding machine and the film molding machine makes it difficult to apply the technique related to the injection molding machine directly to the film molding machine. The techniques that can estimate molding condition parameters of the film molding machine have been desired.

An object of the present disclosure is to provide a method and the like for estimating molding condition parameters that can suitably estimate molding condition parameters for the film molding machine.

Solution to Problems

A method for estimating a molding condition parameter according to one aspect of the present disclosure, includes: acquiring detection data related to a state of a film molding machine detected by a detector; and estimating a molding condition parameter in the film molding machine by inputting the acquired detection data to an estimation model, the estimation model estimating a molding condition parameter in a film molding machine in a case where detection data related to a state of the film molding machine is input.

A computer program according to one aspect of the present disclosure causes a computer to execute processing of: acquiring detection data related to a state of a film molding machine detected by a detector; and estimating a molding condition parameter in the film molding machine by inputting the acquired detection data to an estimation model, the estimation model estimating a molding condition parameter in a film molding machine in a case where detection data related to a state of the film molding machine is input.

An estimation device according to one aspect of the present disclosure, includes: an acquisition unit that acquires detection data related to a state of a film molding machine detected by a detector; and an estimation unit that estimates a molding condition parameter in the film molding machine by inputting the acquired detection data to an estimation model, the estimation model estimating a molding condition parameter in a film molding machine in a case where detection data related to a state of the film molding machine is input.

An estimation system according to one aspect of the present disclosure, includes: a film molding machine; a detector; and an estimation device, and the estimation device includes an acquisition unit that acquires detection data related to a state of a film molding machine detected by the detector, and an estimation unit that estimates a molding condition parameter in the film molding machine by inputting the acquired detection data to an estimation model, the estimation model estimating a molding condition parameter in a film molding machine in a case where detection data related to a state of the film molding machine is input.

Advantageous Effects of Invention

According to the present disclosure, it is possible to suitably estimate molding condition parameters for the film molding machine.

Brief Description of Drawings

FIG. 1 is a schematic diagram of an estimation system according to Embodiment 1.
FIG. 2 is a block diagram illustrating an example of the configuration of a data collection device.
FIG. 3 is a block diagram illustrating an example of the configuration of an estimation device.
FIG. 4 is an example of the contents of information stored in a molding information DB.
FIG. 5 is an explanatory view depicting the outline of an estimation model.
FIG. 6 is a flowchart illustrating one example of a processing procedure to be executed by an estimation device.
FIG. 7 is a flowchart illustrating an example of the processing procedure to be executed by an estimation device according to Embodiment 2.

Description of Embodiments

The present disclosure will specifically be described with reference to the drawings illustrating embodiments thereof.

Embodiment 1

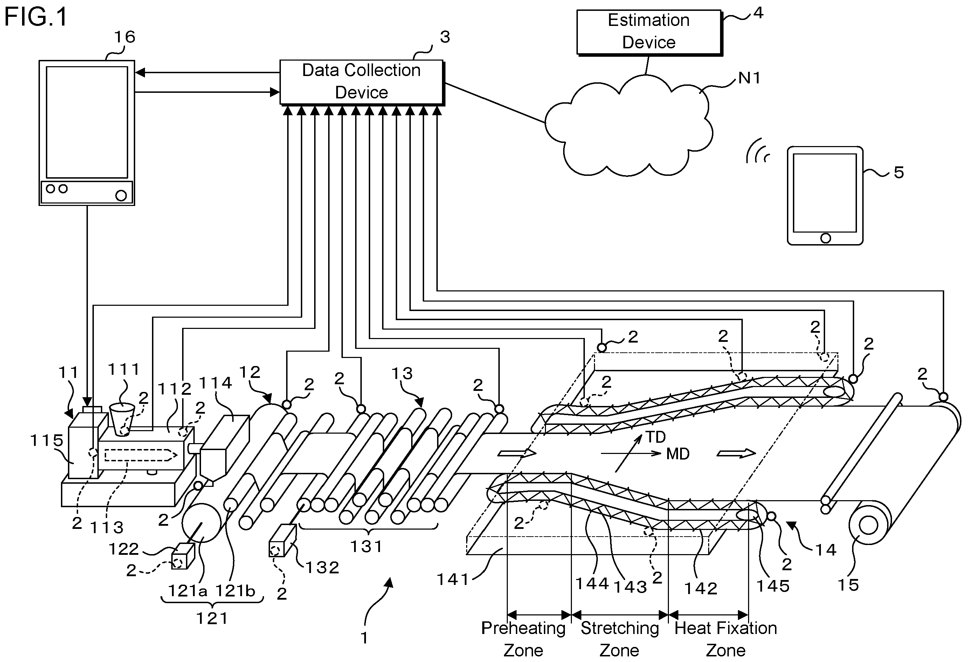

FIG. 1 is a schematic diagram of an estimation system 100 according to Embodiment 1. The estimation system 100 includes a film molding machine 1, multiple detectors 2 and an estimation device 4 as main devices. The estimation device 4 is communicatively connected to the data collection device 3 and a terminal device 5 over a network N1 such as the Internet or the like.

While one film molding machine 1 and one data collection device 3 are illustrated in FIG. 1, multiple data collection devices 3 (not illustrated) are connected to the estimation device 4 through the network N1. The data collection device 3 is connected to one or more film molding machines 1. Each of the data collection devices 3 and one or more film molding machines 1 that are connected to the data collection device 3 are installed in the same factory, for example.

The estimation device 4 is a device that enables various information processing and transmission and reception of information, and includes, for example, a server computer, a personal computer and a quantum computer. The estimation device 4 collects molding information for each of the multiple film molding machines 1. The estimation device 4 estimates molding condition parameters in the film molding machine 1 so that the quality of the films molded by each of the film molding machines 1 satisfies target quality, based on the collected molding information. The estimation device 4 according to Embodiment 1 adjusts multiple molding condition parameters to be set in the film molding machine 1 so that the thickness of a film (film thickness) falls within a predetermined range. The estimation device 4 transmits an estimation result of the molding condition parameters to the terminal device 5.

The terminal device 5 is an information processing terminal with a communication function and a display function, including, for example, a personal computer, a tablet terminal and a smartphone. The terminal device 5 may be installed in the same factory as the film molding machine 1. The terminal device 5 may be portable. The terminal device 5 is a terminal to be used by the user of the film molding machine 1. The user of the film molding machine 1 includes organizations such as a corporation that owns the film molding machine 1 and an operator who belongs to the organization. The user of the film molding machine 1 may be a service provider such as a sales representative or a maintenance manager who is associated with the film molding machine 1. The number of terminal devices 5 may be two or more.

<Film Molding Machine 1>

The film molding machine 1 forms a resin thin film (film) by extrusion molding. The film molding machine 1 is provided with an extruder 11, a casting device 12, an MD stretcher 13, a TD stretcher 14, a winder 15 and a control device 16.

The extruder 11, which is, for example, a single extruder or a twin-screw extruder, is provided with a material supply unit 111 through which resin materials are input, a cylinder 112, a screw 113 and a die 114. The material supply unit 111, which is provided with a hopper for storing resin raw materials and a feeder for feeding resin raw materials, delivers resin raw materials fed into the hopper from the feeder into the cylinder 112 at a constant flow rate. The screw 113 is rotatably inserted into a hole of the cylinder 112. The screw 113 carries the resin raw materials delivered from the raw material supply unit 111 in the direction of extrusion (to the right in FIG.1), and melts and kneads the resin raw materials. The screw 113 is rotated at predetermined rotational speed by a driving force from a driving device 115 containing a motor and a gear reducer (not illustrated), for example. The extruder 11 extrudes the melted resin raw materials into a film through a narrow gap (lip) at the tip of the die 114. The die 114 is a T die, for example.

The casting device 12 is provided with multiple cast rolls 121 for cooling and molding a high-temperature molten product extruded from the die 114. The cast rolls 121 are rotated at predetermined rpm (revolutions per minute) by a driving force from a driving device 122 containing a motor and a gear reducer (not illustrated), for example. The multiple cast rolls 121 include a first roll 121a and a second roll 121b.

The first roll 121a is a metal roll with a temperature control part (not illustrated) for cooling a molten product, for example, and is journaled below the die 114. The first roll 121a holds a film-like molten product extruded from the die 114 between itself and the second roll 121b, and molds the molten product in a film (sheet) form while cooling it in a short time together with the second roll 121b. The casting device 12 controls the thickness of a film so as to fall within a predetermined range, which provides an unstretched film. The temperature adjustment method of the first roll 121a includes, but not particularly limited to, a method using a heat medium such as air, water, oil or the like, or a method with an electric heater or dielectric heating, for example. In the example illustrated in FIG.1, the multiple cast rolls 121 further include rolls for cooling or conveying the molten product.

The MD stretcher 13 includes multiple tension rolls 131, passing the unstretched film conveyed from the casting device 12 between the tension rolls 131 and stretching it in the MD. The MD is a direction along a film conveyance direction and is also referred to as a longitudinal direction. The tension rolls 131 are rotated at predetermined rpm by a driving force output from a driving device 132 containing a motor and a gear reducer (not illustrated), for example.

The multiple tension rolls 131 include a heating roll with a temperature adjustment part for heating a film and a cooling roll with a temperature adjustment part for cooling a film. The temperature adjustment method for the tension rolls 131 includes methods similar to those for the cast roll 121 as described above. The film is heated to a predetermined temperature range in which it is stretchable while in contact with the heating roll, and then stretched in the MD using the difference in rotational speed between the cooling rolls. The stretching ratio in the MD can be adjusted by a velocity ratio between the tension rolls 131. Note that FIG. 1 is a mere example, and the number of tension rolls 131 is not limited to the example illustrated in FIG. 1.

The TD stretcher 14 stretches the film, having longitudinally been stretched by the MD stretcher 13, in the TD. The TD is a direction (film width direction) crossing the film conveyance direction and is also referred to as a transverse direction.

The TD stretcher 14, which is a tenter stretcher, for example, and has a heating device such as a hot air blower (not illustrated), transversely stretches the film while heating the film to a predetermined temperature range that makes the film stretchable.

The TD stretcher 14 has an oven 141 having a heating device such as a hot air blower. The oven 141 contains a flying mechanism having a pair of left and right rails 142 and multiple links 143 disposed on the rails 142. The rails 142 are positioned so as to spread in the TD downstream of the MD. The multiple links 143 form an endless chain. The endless chain composed of the multiple links 143 runs on the rails 142 at predetermined speed by a rotational driving force output from a link driving device 145 located outside the oven 141.

The multiple links 143 are each attached with a clip 144, which is a film gripper. The number of links 143 and the number of clips 144 on the right and left rails 142 are the same. That is, the TD stretcher 14 is provided with pairs of left and right links 143 and pairs of left and right clips 144. The pairs of links 143 and the pairs of clips 144 are positioned on the rails 142 so that they are located at the left and right sides of the film, that is, they are arranged in lines along the TD. By synchronizing with the driving device in advance, the pairs of left and right clips 144 are adjusted so that the phase difference between the clips 144 does not occur, that is, the conveyance periods coincide. The TD stretcher 14 may be of a bearing clip type or a slide clip type.

Both edge of the film is grasped by the clips 144 at the entrance of the TD stretcher 14. The clips 144 are conveyed in the film conveyance direction together with the links 143 while gripping the film, and travel on the rail to convey the film in the film conveyance direction. The film located inside the oven are heated on both surfaces by air blown from the hot air blower disposed above and below the running mechanism, and stretched in the width direction as the clips 144 gripping both edges of the film move. The stretching factor in the TD can be adjusted by the width in the TD of the rail 142. The oven 141 is divided into several zones in the conveyance direction, for example, which makes it possible to adjust a setting temperature or air flow for each zone. The aforementioned zones include a preheating zone, a stretching zone and a heat fixation zone.

The clips 144 release the film at the exit of the TD stretcher 14. The film stretched in the width direction is wound up by the winder 15 via a pick-up machine (not illustrated). The TD stretcher 14 is not limited to a clip tenter, but may be, for example, a pin tenter with pins as a film gripper. The description of each of the components for the above-mentioned TD stretcher 14 is one example, and the temperature adjustment, air flow adjustment as well as the configuration of the links 143 on the rails 142 are not particularly limited.

The film molding machine 1 performs continuous operation without stopping except for specific timing such as the occurrence of device abnormalities or a preset shutdown period.

The control device 16 is a computer for performing operation control of the film molding machine 1. The control device 16 is provided with, though not illustrated, a control unit such as a CPU (Central Processing Unit) or the like, a storage unit such as a ROM (Read Only Memory), a RAM (Random Access Memory), a hard disk or the like, a communication unit for transmitting and receiving information to and from external devices in a wired or wireless manner, a display unit such as a liquid crystal display or an organic EL (Electro Luminescence) display for presenting various images to the user and an operation unit or the like for accepting operation from the user.

The control device 16 accepts setting of molding condition parameters for the film molding machine 1 through the operation unit or the communication unit. The control device 16 further receives detection data detected by the detectors 2 from the data collection device 3 through the communication unit. The control device 16 controls the operation of the film molding machine 1 based on the received molding condition parameter and detection data. The control device 16 further transmits operation data indicating an operation state of the film molding machine 1 to the data collection device 3 through the communication unit. The data collection device 3 transmits the received operation data to the estimation device 4. The operation data may directly be transmitted to the estimation device 4 from a device such as a motor, an inverter or the like in the film molding machine 1, for example, without going through the data collection device 3.

The film molding machine 1 is configured with molding condition parameters for defining molding conditions and operates according to the molding condition parameters. The molding condition parameters include a feeder supply amount, rpm or rotational speed of the screw 113, rpm or rotational speed of the motor for the driving device 115 and the degree of opening of the lip of the die 114 that are in the extruder 11, rpm or rotational speed of the cast roll 121, rpm or rotational speed of the motor for the driving device 122 and the film discharge volume that are in the casting device 12, rpm or rotational speed of the tension roll 131, rpm or rotational speed of the motor for the driving device 132, a stretching factor and film discharge volume that are in the MD stretcher 13, and speed of a film conveyance line, temperature (especially for each zone) inside the oven 141, pressure (especially for each zone) inside the oven 141, air volume or flow rate, a stretching angle, a stretching factor and film discharge volume at the inlet and outlet of the oven 141 (especially an air blowing nozzle of the hot air blower in the vicinity of the inlet and the outlet) that are in the TD stretcher 14. Note that film speed, film width and film thickness may be set instead of a film discharge amount. The optimum molding condition parameters vary from time to time during operation depending on the environment of the film molding machine 1 and the state of a molded product.

The operation data of the film molding machine 1 includes, for example, a feeder supply amount, temperature of the cylinder 112, rpm of the screw 113, rpm of the motor, torque of the motor, and motor current in the extruder 11, rpm of the cast roll 121, rpm of the motor, torque of the motor and motor current in the casting device 12, rpm of the tension roll 131, rpm of the motor, torque of the motor and motor current for the MD stretcher 13, and speed of the line, a tension of the line in the TD stretcher 14. The operation data corresponds to set values for items, that is, control values by the control device 6.

<Detector 2>

The detectors 2 are sensors for detecting in time series physical quantities indicative of the state of the film molding machine 1. The state of the film molding machine 1 detected by the detectors 2 includes the condition of a film (resin) molded by the film molding machine 1 as well as the state of the film molding machine 1 itself. The detectors 2 are connected to the data collection device 3 in a wired or wireless manner and directly or indirectly outputs detection data obtained by detection to the data collection device 3.

The estimation system 100 is provided with multiple detectors 2 for detecting various detection data. A part of the multiple detectors 2 are connected to the data collection device 3, so that the data collection device 3 acquires detection data from the detectors 2. Another part of the multiple detectors 2 are connected to the control device 16, so that the data collection device 3 acquires detection data from the detectors 2 via the control device 16. The wire connections between a part of the detectors 2 and the data collection device 3 or the control device 16 are not illustrated in FIG. 1.

Detectors 2 include those for detecting sensor values necessary for operation control of the film molding machine 1 and those for detecting sensor values necessary for estimating the molding condition parameters in the film molding machine 1 according to the present estimation method. The detectors 2 may be configured separately from the film molding machine 1 or may be configured to be incorporated into the film molding machine 1.

The detectors 2 include, for example, an accelerometer, a speed sensor, a displacement sensor, an AE (Acoustic Emission) sensor, a viscometer, a gel counter, a distortion sensor, a crystal orientation sensor, an anemometer, an airflow meter, a thermometer, an surface potential sensor, a laser sensor, an infrared sensor, an X-ray sensor, a position sensor, a tension sensor, a load cell, a torque sensor, an encoder, an ammeter, a tachometer, an angular sensor, a pressure sensor, a weight meter, a length measurement sensor, a photosensor (camera), a flowmeter, a voltmeter, a timer and a wattmeter.

The detection data detected by the detectors 2 include, for example, acceleration, velocity, displacement, viscosity, gel count, distortion, crystal orientation degree, air speed, air volume, temperature, charge amount, position, phase difference, tension, torque, rpm, angle, pressure, weight, length, thickness, image, flow rate, current, voltage, time, force and power consumption. Note that the detection data detected by the detectors 2 may herein also include data of the calculation values indirectly calculated from the sensor values, not limited to data of the sensor values directly detected by the detectors 2.

Detection data and the detectors 2 for the detection data that are associated with the extruder 11 include, for example, an accelerometer for detecting acceleration (vibration) of the reduction gear, a tachometer for detecting rpm of the screw 113 or the motor, a tachometer for detecting rotational speed of the screw 113 or the motor, a torque sensor for detecting torque of the motor, an ammeter for detecting motor current, a viscometer for detecting resin viscosity (especially resin viscosity directly after ejection of the die 114), a contact thermometer or contactless thermography camera for detecting temperature inside the cylinder 11 or the temperature of the resin (especially resin directly after ejection of the die 114), a laser displacement sensor for detecting the degree of opening of the lip of the die 114 and a weight meter for detecting feeder supply amount.

Detection data and the detectors 2 for the detection data that are associated with the casting device 12 include, for example, an accelerometer for detecting acceleration (vibration) of the bearing of the cast roll 121, a speed sensor for detecting rotational speed of the cast roll 121 or the motor, a tachometer for detecting rpm of the cast roll 121 or the motor, a torque sensor for detecting torque of the motor, an ammeter for detecting motor current, a thermometer or thermography camera for detecting temperature of the cast roll 121 or a film, a laser sensor for detecting width of the film, a laser thickness sensor for detecting thickness of the film and a gel counter for detecting the number of gels (especially, the film downstream of the cast roll 121).

Detection data and the detectors 2 for the detection data that are associated with the MD stretcher 13 include, for example, an accelerometer for detecting acceleration (vibration) of the bearing of the tension roll 131, a tachometer for detecting rpm of the tension roll 131 or the motor, a speed sensor for detecting rotational speed of the tension roll 131 or the motor, a torque sensor for detecting torque of the motor, an ammeter for detecting motor current, a thermometer or thermography camera for detecting temperature of the tension roll 131 or a film, a laser sensor for detecting width of the film, and a laser sensor for detecting thickness of the film.

Detection data and the detectors 2 for the detection data that are associated with the TD stretcher 14 include, for example, an accelerometer for detecting acceleration (vibration) of the TD stretcher 14 (especially rails 142 at the vicinity of the start and end points of the stretching zone inside the oven 141), a speed sensor for detecting speed (vibration), a displacement sensor for detecting displacement (vibration), an AE sensor for detecting elastic wave, a distortion sensor for detecting distortion of the clips 144, a laser sensor for detecting a phase difference (time deviation when the clips 144 pass through a reference position) between a pair of left and right clips 144, a photosensor or photo-electronic sensor, a thermometer or thermography camera for detecting temperature inside the oven 141 (especially, for each zone), a pressure sensor for detecting pressure inside the oven 141 (especially, for each zone), an anemometer for detecting air volume at the inlet and outlet of the oven 141 (especially an air blowing nozzle of the hot air blower in the vicinity of the inlet and the outlet), an airflow meter for detecting flow rate at the inlet and outlet of the oven 141 (especially an air blowing nozzle of the hot air blower in the vicinity of the inlet and the outlet), a pressure meter for detecting pressure at the inlet and outlet of the oven 141 (especially an air blowing nozzle of the hot air blower in the vicinity of the inlet and the outlet), a tachometer for detecting rpm of the fan in the hot air blower, a speed sensor for detecting speed of the line of the film conveyance line, a tension sensor for detecting a tension of the film conveyance line or the clips 144, a crystal orientation sensor for detecting a crystal orientation degree in the film (especially the film most downstream of the TD stretcher 14), a gel counter for detecting the number of gels on the film (especially most downstream of the TD stretcher 14), a laser sensor for detecting width of the film and a laser sensor for detecting thickness of the film.

Detection data and the detectors 2 for the detection data that are associated with the winder 15 include, for example, a surface potential sensor for detecting a charge amount on a film.

The detectors 2 are provided at suitable positions in the film molding machine 1 or suitable positions near the film molding machine 1 so as to detect the states of the components and the film at desired positions in the film molding machine 1. The detectors 2 preferably have heat resistance, water resistance, oil resistance or the like depending on the set positions. Note that the detectors 2 and the details of the detection data are not limited to the aforementioned example. The above-mentioned detection data is not limited to the data detected by the detectors 2 exemplified in combination, and the detectors 2 are not limited to ones for detecting the detection data exemplified in combination.

The aforementioned molding condition parameters, operation data and detection data are examples of parameters that affect film molding by the film molding machine 1. Among them, the molding condition parameters correspond to parameters that can be controlled by the machine settings.

<Data Collection Device 3>

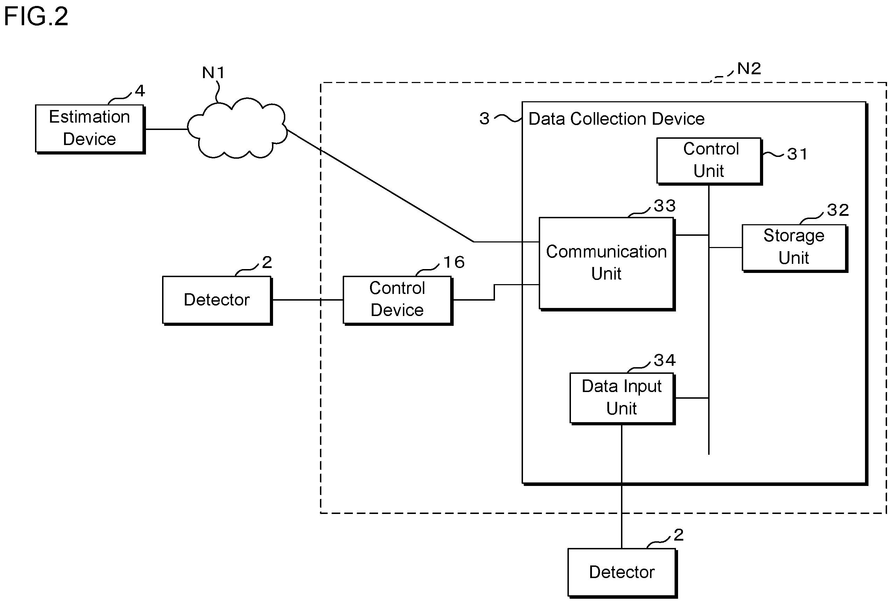

FIG. 2 is a block diagram depicting an example of the configuration of the data collection device 3. The data collection device 3, which is a computer, is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory) or a RAM (Random Access Memory), an I/O terminal and the like. The control unit 31 executes a control program stored in the storage unit 32, which will be described later, to perform processing of collecting molding information including detection data and operation data and transmitting it to the estimation device 4. Note that each functional part of the data collection device 3 may be realized in software or in hardware, or in combination thereof.

The storage unit 32 is provided with a nonvolatile memory such as a hard disk, an EEPROM (Electrically Erasable Programmable ROM), a flash memory or the like. The storage unit 32 stores a control program for causing the computer to execute processing of collecting molding information.

The communication unit 33 is provided with a communication device for achieving communication through networks N1 and N2. The communication unit 33 is connected to the control device 16 through the network N2 such as a LAN (Local Area Network) or the like. The control unit 31 can transmit and receive various information to and from the control device 16 via the communication unit 33. The communication unit 33 is also connected to the estimation device 4 on a cloud, which is the network N1, through a relay device (not illustrated). The relay device is a router, a gateway and the like. The control unit 31 can transmit and receive various information to and from the estimation device 4 via the relay device and the communication unit 33.

The data input unit 34 is an input interface to which signals output from the detectors 2 are input. The data input unit 34 is connected to the detectors 2. The control unit 31 acquires detection data output from the detectors 2 via the data input unit 34 as needed.

The data collection device 3 and the control device 16 are not limited to separate devices but may be configured as a common single device.

<Estimation Device 4>

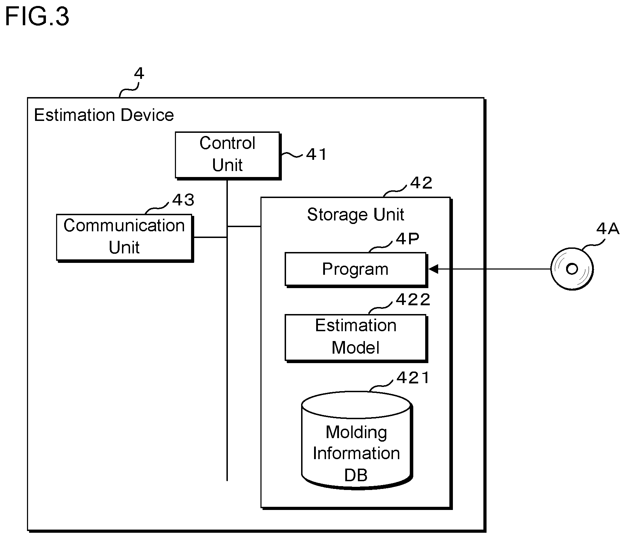

FIG. 3 is a block diagram illustrating an example of the configuration of the estimation device 4. The estimation device 4 is provided with a control unit 41, a storage unit 42 and a communication unit 43. The storage unit 42 and the communication unit 43 are connected to the control unit 41. The estimation device 4 may be configured with multiple computers to perform distributed processing, may be realized by multiple virtual machines set up in a single server, or may be realized using a cloud server.

The control unit 41 has an arithmetic processing circuit such as a CPU, a multi-core CPU, an ASIC or an FPGA, an internal storage device such as a ROM or a RAM, an I/O terminal and the like. Note that each functional part of the estimation device 4 may be realized in software or in hardware, or in combination thereof.

The storage unit 42 has a nonvolatile memory such as, for example, a hard disk, a flash memory, an SSD (Solid State Drive) or the like. The storage unit 42 may be an external storage device connected to the estimation device 4. The storage unit 42 stores various computer programs and data to be referred to by the control unit 41. The storage unit 42 of the present embodiment stores the program 4P for causing the computer to execute processing related to estimation of molding condition parameters of the film molding machine 1, a molding information DB (Data Base) 421 necessary for executing the program 4P and an estimation model 422. The molding information DB 421 is a database storing molding information received from each of the data collection devices 3. The estimation model 422 is a learning model generated by machine learning. The estimation model 422 is expected to be used as a program module that is part of artificial intelligence software.

The computer program (computer program product) including the program 4P may be provided in a non-transitory storage medium 4A readably recording the computer program. The storage unit 42 stores the computer program read from the recording medium 4A by a read-out device (not illustrated). The recording medium 4A is, for example, a magnetic disk, an optical disk, a semiconductor memory or the like. Moreover, the computer program may be downloaded from an external server connected to a communication network and stored in the storage unit 42. The program 4P may be constructed by a single computer program or multiple computer programs, or may be executed on a single computer or may be executed on computers interconnected over a communication network.

The communication unit 43 is provided with a communication device that realizes communication through the network N1. The control unit 41 can transmit and receive various information to and from the data collection device 3 and the terminal device 5 via the communication unit 43.

<Molding Information DB 421>

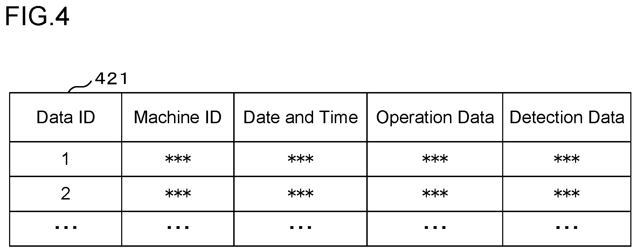

FIG. 4 is an example of the contents of the information stored in the molding information DB 421. The molding information DB 421 stores records of information such as a machine ID, date and time, operation data, detection data and the like that are associated using the data ID as a key. The machine ID indicates a machine identifier of the film molding machine 1. The date and time indicates the year, month and date when the operation data or detection data stored as a record is acquired. The operation data includes the aforementioned various types of operation data. The detection data includes the aforementioned various types of detection data. Each time the estimation device 4 receives operation data and detection data from the data collection device 3, it stores them in time series in the molding information DB 421. The contents of the molding information DB 421 are updated as needed.

<Estimation Model 422>

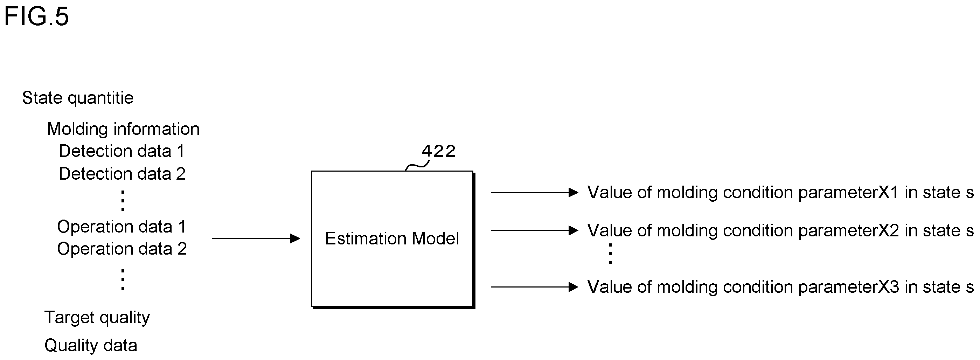

FIG. 5 is an explanatory view depicting the outline of the estimation model 422. The estimation model 422 is a learning model that receives, as an input, molding information including detection data and operation data of the film molding machine 1 and outputs a molding condition parameter in the film molding machine 1.
The estimation model 422, which is DQN (Deep Q-Network), trains molding condition parameters according to the molding information by deep reinforcement learning, for example. The estimation model 422 is a neural network model that outputs action values of multiple actions a when a state s is input.
The estimation model 422 has an input layer to which a state s is input, an output layer that outputs action values Q (s, a) of actions a in the input state s, and an intermediate layer that extracts features of the state s.
The state s input to the estimation model 422 includes the detection data and the operation data obtained from the film molding machine 1. The detection data and the operation data include the aforementioned multiple types of data. The detection data and the operation data as inputs to the estimation model 422 may be a combination of the appropriate detection data and operation data selected from the detection data and operation data that are exemplified above. The detection data preferably includes both of the detection data detected by the detectors 2 for estimating a state and the detection data detected by the detectors 2 for controlling operation. For example, the detection data includes acceleration, pressure, air volume, difference in period, distortion, revolutions per second, rotational speed, temperature, pressure, torque and film thickness, while the operation data includes revolutions per second, rotational speed, temperature, pressure and torque. The molding information may include the molding condition parameters set in the film molding machine 1. The detection data and the operation data may be time-series data for a part of the entire period from the start of operation to acquisition of data, or may be time-series data for a predetermined number of detections. The detection data and the operation data may be input as image data indicating time-series data.
The state s may also include at least one of target quality required for a film to be produced (e.g., target film thickness) and actual quality data for a molded film (e.g., measured film thickness) as illustrated in FIG. 5. The target quality may be included in the operation data and be input as a part of the operation data. The quality data may be included in the detection data and may be input as part of the detection data.
Note that the input information input to the estimation model 422 may be the detection data and the operation data themselves, but may be data that has undergone predetermined preprocessing such as feature extraction or the like based on the detection data and the operation data.
The output layer of the estimation model 422 has nodes corresponding to multiple actions a from each of which an action value Q (s, a) for the corresponding action a is output. The actions a correspond to changed values of the molding condition parameters. The changed values may be values of the molding condition parameters after change, or amounts of change of the molding condition parameters. The changed values are hereafter regarded as values of the molding condition parameters. The action a of a high value represents an appropriate molding condition parameter to be set to the film molding machine 1. The output layer of the estimation model 422 may be for outputting an action value Q for multiple types of molding condition parameters.
The estimation device 4 selects the changed value of the maximum action value based on the action values output from the estimation model 422 to derive a changed value of the molding condition parameter according to the molding information.
The estimation device 4 generates the estimation model 422 by deep reinforcement learning using predetermined data. In the reinforcement learning, assuming that the molding information and the changed value are respectively "state" and "action," a required "reward" is calculated to train the value of the Q value or Q function (action value function).
The action value function is expressed by formula (1) below.

$$Q\,(s,\,a) \leftarrow Q\,(s,\,a) + \alpha\,(R + \gamma\,\max Q\,(s\_next,\,a\_next) - Q\,(s,\,a))...(1)$$

where

s: state
a: action selected in state s.
$\alpha$ : learning rate
R: reward earned as a result of the action
$\gamma$ : discount rate
maxQ (s_next, a_next): maximum value of the action value Q for the next possible action

The estimation device 4 machine- learns the estimation model 422 by optimizing the parameters in the estimation model 422 by the error backpropagation method such that the TD error, i.e., the second term on the right side in the above-mentioned formula (1) approaches zero. The parameters of the estimation model 422 are updated so that the error between the expected reward value and the current action evaluation approaches 0.

The estimation device 4 performs processing of training the molding condition parameters using the above-mentioned reinforcement learning. Specifically, the estimation device 4 acquires the target quality of a film, the actual quality data and the molding information based on the information stored in the molding information DB 421. The target quality is, for example, a value set by the operator in advance. The target quality may be acquired as part of the operation data. The quality data is obtained by measuring the thickness of a film formed in the operation state indicated by the molding information. The quality data may be acquired as part of the detection data. The quality data is not limited to an actual measured value, but may be a predictive value obtained using a machine learning model, a predetermined simulation model, or the like that predicts quality data according to the molding information.

The estimation device 4 performs reinforcement learning based on a reward (score) calculated according to the target quality and the quality data, where the molding condition parameter before change is state s and the changed value of the molding condition parameter is action a. The reward is automatically calculated by the estimation device 4 based on, for example, the target quality contained in the operation data and the quality data contained in the detection data that are stored in the molding information DB 421. The estimation device 4 calculates a reward so that it increases the value as the divergence between the film thickness as target quality and the film thickness as quality data is small. If the divergence between the target quality and the quality data is large, a zero reward or negative reward is conferred. The formula for calculating the reward is not particularly limited.

The target quality is not limited to the film thickness, but may include, for example, a crystalline orientation degree, film thickness distribution and permeability at the outlet of the TD stretcher 14 as well as crystallinity and transparency in the casting device 12. The target quality may include multiple physical properties.

The estimation device 4 learns the estimation model 422 based on the molding information to be input to the estimation model 422, the action values Q output when state variables are input and the calculated reward. The estimation device 4 may learn the estimation model 422 using the molding information acquired from multiple film molding machines 1. After completion of the training, the estimation device 4 stores the definition information related to the trained estimation model 422 in the storage unit 42 as the trained estimation model 422.

The estimation model 422 is not limited to be generated and trained by the estimation device 4. The estimation model 422 may be obtained by a model trained on an external server being transmitted to the estimation device 4 and stored in the storage unit 42. The estimation model 422 may be generated on an external server and trained by the estimation device 4.

The configuration of the estimation model 422 is not limited, as long as it can estimate changed values of the molding condition parameters for the detection data and the operation data. The estimation model 422 may be configured to adjust molding condition parameters using a map in which the state quantities and action values are associated with each other. The estimation model 422 may be a model trained by supervised learning using training data including molding information associated with changed values of the molding condition parameters as correct values. The estimation model 422 may be models based on the other learning algorithms, such as, for example, RNN (Recurrent Neural Network), CNN (Convolution Neural Network), GNN (Graph Neural Network), Transformer, support vector machines, decision trees, logistic regression, random forests or the like.

By using wide variety of detection data and operation data as input elements, the estimation model 422 can estimate molding condition parameters with high accuracy by incorporating various features. For example, inputting mechanical vibration indicated by acceleration may incorporate the deterioration state of the device member. Inputting resin viscosity may incorporate changes in the properties of the resin, which leads to improved feedback on the feeder supply volume and mixing conditions in the extruder 11 in particular. Inputting the number of gels or gel count may incorporate quality abnormalities caused by the presence or absence of unmixed parts of resin raw materials and foreign substances. Inputting distortion of the clips may incorporate the quality abnormalities of the devices, which leads to improved feedback of parameters that may contribute to a reduction in product defects in particular. Inputting a crystalline orientation degree may incorporate the quality abnormalities. Inputting air speed or air volume inside the oven 141 may incorporate the environment in the oven 141, which leads to improved feedback of the conditions inside the oven 141 in particular. Inputting temperature at detection sites and detection targets may incorporate various temperature environments. Inputting a charge amount on the film may incorporate poor film winding and quality abnormalities in the vicinity of the winder 15. Inputting a synchronization error indicated by the phase difference between the left and right clips may incorporate sliding load and quality change caused by device load and device deterioration. Inputting a line tension may incorporate a wear condition of the rails. Inputting motor torques, rpm and rotational speed at detection sites and detection targets may incorporate the deteriorated state of the driving unit.

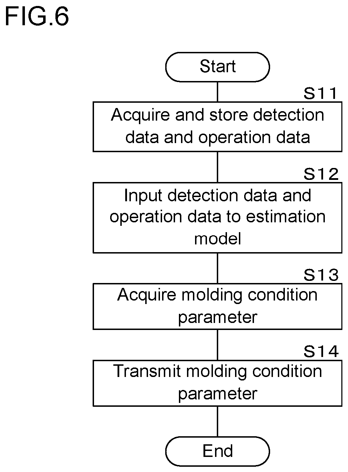

FIG. 6 is a flowchart illustrating one example of a processing procedure to be executed by the estimation device 4. The control unit 41 of the estimation device 4 executes the following processing according to the program 4P stored in the storage unit 42. The control unit 41 starts the following processing at predetermined or appropriate intervals.

The control unit 41 of the estimation device 4 acquires, by a function as an acquisition unit, molding information including detection data and operation data during continuous operation through the data collection device 3 and stores the acquired molding information in the molding information DB 421 (step S11). The molding information is associated with the machine ID of the film molding machine 1. The detection data may contain quality information, while the operation data may contain target quality. The control unit 41 may collectively acquire multiple detection data and multiple operation data.

The control unit 41 inputs, by a function as an estimation unit, the acquired molding information including the detection data and operation data to the estimation model 422 (step S12). The input to the estimation model 422 may include target quality and quality data. The control unit 41 acquires molding condition parameters output from the estimation model 422 (step S13). More specifically, the control unit 41 selects an optimal action based on the output data from the estimation model 422 to acquire a changed value of one or more molding condition parameters.

The control unit 41 transmits information indicating the acquired changed value of the molding condition parameter to the terminal device 5 of the user corresponding to the machine ID of the film molding machine 1 (step S14). The control unit 41 ends the series of processing.

The user confirms the changed value of the molding condition parameter through the terminal device 5 and changes the settings of the molding condition parameter by operating the control device 16 as needed. In the case where the control device 16 receives the settings of the molding condition parameter, it outputs, to the film molding machine 1, a control signal for controlling the operation of the film molding machine 1 in accordance with the changed molding condition parameter having been received. The film molding machine 1 operates in accordance with a control signal based on the changed molding condition parameter.

At step S14, the control unit 41 may automatically transmit the acquired changed value of the molding condition parameter or the adjustment instructions responsive to the changed value of the molding condition parameter to the control device 16 through the data collection device 3 or the like. The control device 16 outputs a control signal responsive to the changed value or the adjustment instructions of the molding condition parameter acquired from the estimation device 4, to the film molding machine 1.

The control unit 41 may determine whether or not the acquired changed value of the molding condition parameter exceeds a pre-allowable range. If determining that the changed value of the molding condition parameter exceeds a pre-allowable range, the control unit 41 may output an alert to the terminal device 5 or the control device 16. If the changed value is large, there is a probability that the molding condition parameter is not appropriate or that the state of the film molding machine 1 is abnormal. The configuration above makes it possible to detect such an abnormality at an early stage.

The control unit 41 repeatedly executes the above-mentioned processing during the continuous operation of the film molding machine 1. Estimation of a molding condition parameter based on the detection data and operation data detected during continuous operation is executed while continuous operation is kept, which enables feedback control responsive to the estimation result. The control unit 41 preferably executes the above-mentioned processing in real time every time new detection data and operation data are detected. For example, by executing the processing at relatively short intervals, such as every minute, every five minutes, more appropriate operation control is made possible.

Though an example where the estimation device 4 executes a series of processing is described above, the subject of each processing is not limited. Each processing in the flowchart may be executed by, for example, the control device 16, the data collection device 3 or the terminal device 5. The estimation model 422 is deployed on the control device 16 or the data collection device 3 so that estimation processing of molding condition parameters may be executed on the control device 16 side or the data collection device 3 side.

The estimation device 4 may transmit detailed information on the molding condition parameter, detection data and operation data to the terminal device 5. The detailed information may be output in response to the estimation of the changed value of the molding condition parameter, or output in response to a request from the terminal device 5. The estimation device 4 can generate, as detailed information, a trend graph representing a trend of at least one of the molding condition parameter, detection data and operation data during a predetermined period based on the information stored in the molding information DB 421.

The estimation device 4 may retrain the estimation model 422 based on the molding information obtained during the continuous operation. The estimation device 4 receives, for example, molding information, target quality and quality data obtained during a predetermined period from the data collection device 3. The estimation device 4 retrains the estimation model 422 based on the received molding information, target quality and quality data to update the estimation model 422. The data used for retraining may include molding information and the like acquired from multiple film molding machines 1.

The estimation device 4 may evaluate the accuracy of the estimation model 422 using an evaluation method such as cross-validation, for example, and update the estimation model 422 if the evaluation indicator satisfies predetermined criteria. The estimation device 4 may receive the necessity of update of the estimation model 422 from a service provider. This can improve the estimation accuracy of the molding condition parameters through implementation of the present system.

According to the present embodiment, the molding condition parameters of the film molding machine 1 can be estimated with high accuracy based on the various detection data acquired from the detectors 2 for detecting the state of the film molding machine 1. In the conventional film molding machine, the detection data by the detectors 2 has been mainly used for operation control, and the state of the film molding machine 1 during operation was not taken into account in adjusting the molding condition parameters. In the present embodiment, the detectors 2 aimed at maintenance of the film molding machine 1 are disposed, so that more detection data than those obtained by the conventional film molding machine 1 can be collected and utilized for state analysis.

The detection data is collected during the continuous operation of the film molding machine 1 and the molding condition parameters are estimated based on the collected data, which enables appropriate feedback.

The use of the estimation model 422 enables estimation of the molding condition parameters of the film molding machine 1 with ease and high accuracy. The use of multiple independent detection data indicating the states of the film molding machine 1 without correlation as input information of the estimation model 422 can improve the estimation accuracy of the molding condition parameters.

The film molding machine 1 contains a number of devices and components in one line that operate in conjunction with each other. Accordingly, deterioration or minor defects in a part of the devices or components that exist from upstream to downstream in the film molding machine 1 may degrade the quality of a molded product. If the film molding machine 1 continues to operate with the part of the devices degraded, the load on all the devices increases, which accelerates the overall deterioration. In addition, a number of parameters in the film molding machine 1 affect each other. Changing one parameter to get closer to the target quality may cause the other parameters to fluctuate, resulting in poor quality. The use of the estimation model 422 can simultaneously optimize multiple parameters according to the situations of the devices and components in the film molding machine 1 taking a variety of molding information into account. Appropriate adjustment of the parameters according to the deterioration state of the film molding machine 1 can reduce the operating load of the film molding machine 1.

The estimation device 4 can accumulate a huge amount of data on a cloud and can provide the terminal device 5 with estimation results of the molding condition parameters based on the accumulated huge amount of data. This allows the user to clearly recognize the molding condition parameters.

The estimation device 4 can output the estimation results of the molding condition parameters to the film molding machine 1 via the control device 16. This allows automatic execution from the estimation of the molding condition parameters to adjustment, which improves convenience.

Embodiment 2

In Embodiment 2, the configuration in which the estimation models 422 or features depending on the film molding machines 1 are used will be described. The difference from Embodiment 1 is mainly described below, and components corresponding to those in Embodiment 1 will be denoted by the same reference codes and will not be described in detail here.

The estimation device 4 according to Embodiment 2 stores multiple types of estimation models 422 generated by different algorithms in the storage unit 42. The estimation device 4 determines the estimation model 422 to be used for estimation of molding condition parameters based on the type of the film molding machine 1 used by the user and the molding information collected from the film molding machine 1 prior to the estimation of the molding condition parameters according to the molding information. The determination of the estimation model 422 can be made based on the estimation accuracy for each of the estimation models 422. For example, the accuracy of each of the estimation models 422 is evaluated by an evaluation method such as cross-validation or the like based on the estimation results of the estimation models 422 for the test data of the molding information in the film molding machine 1. The estimation model 422 with the highest accuracy is selected from all the prepared estimation models 422 to determine the estimation model 422.

By fine-tuning the estimation model 422 having been generated in advance, the estimation device 4 may generate the estimation model 422 customized to estimate molding condition parameters of the film molding machine 1 used by the user.

The estimation device 4 may also select detection data and operation data used for input information to be input to the estimation model 422 from multiple detection data and operation data that are set in advance depending on the type of the film molding machine 1 used by the user. The detection data and the operation data used as input information can be determined, for example, based on the degree of contribution of the detection data and the operation data. For example, estimation with the estimation model 422 is performed using multiple detection data and operation data set in advance, and SHAP (SHapley Additive exPlanation), LIME (Local Interpretable Model-Agnostic Explanations) or the like is used to calculate the degree of contribution of the input data corresponding to the detection data and the operation data. The estimation device 4 determines the detection data and operation data to be used for input information by selecting, for example, the detection data and operation data with calculated contribution degree greater than or equal to a predetermined value, or selecting a predetermined number of the detection data and operation data in descending order from the largest degree of contribution.

The estimation device 4 stores, in the storage unit 42, the machine ID of the determined estimation model 422 as well as the types of the detection data and operation data used for the input information and the machine ID of the film molding machine 1 to which this estimation model 422 and the detection data and the operation data are applied, in association with each other.

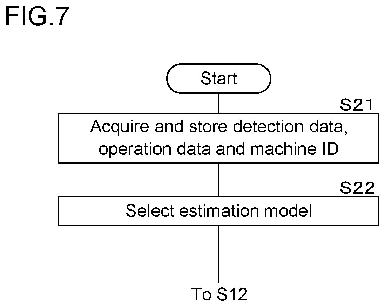

FIG. 7 is a flowchart illustrating an example of the processing procedure to be executed by the estimation device 4 according to Embodiment 2.

The control unit 41 of the estimation device 4 acquires the molding information containing the detection data and the operation data obtained during continuous operation and the machine ID of the film molding machine 1 in association with each other and stores the acquired molding information in the molding information DB 421 (step S21).

The control unit 41 selects the estimation model 422 that is associated with the acquired machine ID of the film molding machine 1 (step S22). At step S22, the control unit 41 specifies the estimation model 422 corresponding to the acquired machine ID based on the pre-stored correspondence between the film molding machines 1 and the estimation models 422 to be applied.

The control unit 41 hereafter executes processing similar to that in Embodiment 1 to estimate molding condition parameters using the selected estimation model 422. In the case where molding condition parameters to be used are set for each type of the film molding machine 1, the control unit 41 specifies the molding condition parameters associated with the acquired machine ID of the film molding machine 1 based on the pre-stored correspondence between the film molding machines 1 and the applied molding condition parameters.

According to the present embodiment, the use of the estimation model 422, the detection data and the operation data depending on the type of the film molding machine 1 owned by the user can improve the estimation accuracy of molding condition parameters. The film molding machines 1 often have configurations significantly different from each other. By setting the type of the estimation model 422 as well as the detection data and the operation data to be used depending on the type of the film molding machine 1, molding condition parameters can highly accurately be estimated according to the state of the film molding machine 1.

The embodiments disclosed herein are illustrative in all respects, and should be considered not to be restrictive. Technical characteristics described in the respective embodiments can be combined with each other, and the scope of the invention is intended to include all modifications within a scope of the appended claims and a scope equivalent to the scope of the appended claims. The sequence shown in each embodiment is not limited, and to the extent that there is no conflict, each processing procedure may be performed in a different order, or multiple processes may be performed in parallel. The processing entity of each processing is not limited, and the processing of each device may be executed by another device within the scope of consistency.

The matters described in each embodiment can be combined with each other. Moreover, independent claims and dependent claims stated in the scope of claims can be combined with each other in any combination, regardless of the citation format. In addition, the scope of claims uses the form of describing claims that depend on two or more other claims (multi-claim format), though not limited to this form. The scope of claims uses the form of describing multiple claims that depend from at least one multiple claims (multi-multi claims).

Concerning the above-mentioned embodiments, the following clauses are further disclosed.

Clause 1

A method for estimating a molding condition parameter, comprising:

acquiring detection data related to a state of a film molding machine detected by a detector; and
estimating a molding condition parameter in the film molding machine by inputting the acquired detection data to an estimation model, the estimation model estimating a molding condition parameter in a film molding machine in a case where detection data related to a state of the film molding machine is input.

Clause 2

The method for estimating a molding condition parameter according to clause 1, wherein

the detection data is acquired during continuous operation of the film molding machine, and
the molding condition parameter is estimated based on the detection data while the continuous operation is kept.

Clause 3

The method for estimating a molding condition parameter according to clause 1 or 2, further comprising:

acquiring quality data indicative of quality of a film molded by the film molding machine, wherein
the molding condition parameter is estimated by inputting the acquired detection data and quality data to the estimation model, the estimation model estimating a molding condition parameter in a film molding machine in a case where detection data and quality data of the film molding machine are input.

Clause 4

The method for estimating a molding condition parameter according to any one of clauses 1 to 3, further comprising transmitting the estimated molding condition parameter to the film molding machine.

Clause 5

The method for estimating a molding condition parameter according to any one of clauses 1 to 4, further comprising transmitting information indicative of the estimated molding condition parameter to a user of the film molding machine.

Clause 6

The method for estimating a molding condition parameter according to any one of clauses 1 to 5, wherein

the film molding machine is provided with an extruder, a casting device, an MD stretcher, a TD stretcher and a winder,
the molding condition parameter includes at least one of a feeder supply amount in the extruder, rpm in the extruder, rotational speed in the extruder, the degree of opening of a lip of a die in the extruder, rpm in the casting device, rotational speed in the casting device, rpm in the MD stretcher, rotational speed in the MD stretcher, speed of a line in the TD stretcher, temperature in the TD stretcher, pressure in the TD stretcher, air volume in the TD stretcher, and air speed in the TD stretcher.

Clause 7

The method for estimating a molding condition parameter according to any one of clauses 1 to 6, wherein

the film molding machine is provided with an extruder, a casting device, an MD stretcher, a TD stretcher and a winder, and
the detection data includes a physical quantity associated with the extruder, a physical quantity associated with the casting device, a physical quantity associated with the MD stretcher, a physical quantity associated with the TD stretcher or a physical quantity associated with the winder.

Clause 8

The method for estimating a molding condition parameter according to any one of clauses 1 to 7, wherein

the film molding machine is provided with an extruder, a casting device, an MD stretcher, a TD stretcher and a winder, and
the detection data includes at least one of acceleration in the extruder, resin viscosity in the extruder, acceleration in the casting device, a gel count on a film in the casting device, acceleration in the MD stretcher, acceleration in the TD stretcher, air speed in the TD stretcher, air volume in the TD stretcher, distortion of a film gripper in the TD stretcher, a phase difference between a pair of left and right film grippers in the TD stretcher, a crystal orientation degree in the TD stretcher, a gel count on a film in the TD stretcher and a charge amount on a film in the winder.

Clause 9

The method for estimating a molding condition parameter according to any one of clauses 1 to 8, wherein the detection data selected from a plurality of types of pre-set detection data is input to the estimation model.

Clause 10

The method for estimating a molding condition parameter according to any one of clauses 1 to 9, further comprising:

preparing a plurality of types of estimation models generated by different algorithms; and
selecting one of the plurality of types of estimation models depending on a type of the film molding machine.

Reference Signs List

| | |
|---|---|
| 100 | estimation system |
| 1 | film molding machine |
| 11 | extruder |
| 12 | casting device |
| 13 | MD stretcher |
| 14 | TD stretcher |
| 15 | winder |
| 16 | control device |
| 2 | detector |
| 3 | data collection device |
| 31 | control unit |
| 32 | storage unit |
| 33 | communication unit |
| 34 | data input unit |
| 4 | estimation device |
| 41 | control unit |
| 42 | storage unit |
| 43 | communication unit |
| 4A | recording medium |
| 4P | program |
| 421 | molding information DB |
| 422 | estimation model |
| 5 | terminal device |

**Claims**

1. A method for estimating a molding condition parameter, comprising:

acquiring detection data related to a state of a film molding machine detected by a detector; and
estimating a molding condition parameter in the film molding machine by inputting the acquired detection data to an estimation model, the estimation model estimating a molding condition parameter in a film molding machine in a case where detection data related to a state of the film molding machine is input.

2. The method for estimating a molding condition parameter according to claim 1, wherein

the detection data is acquired during continuous operation of the film molding machine, and
the molding condition parameter is estimated based on the detection data while the continuous operation is kept.

3. The method for estimating a molding condition parameter according to claim 1 or 2, further comprising:

acquiring quality data indicative of quality of a film molded by the film molding machine, wherein the molding condition parameter is estimated by inputting the acquired detection data and quality data to the estimation model, the estimation model estimating a molding condition parameter in a film molding machine in a case where detection data and quality data of the film molding machine are input.

4. The method for estimating a molding condition parameter according to any one of claims 1 to 3, further comprising transmitting the estimated molding condition parameter to the film molding machine.

5. The method for estimating a molding condition parameter according to any one of claims 1 to 4, further comprising transmitting information indicative of the estimated molding condition parameter to a user of the film molding machine.

6. The method for estimating a molding condition parameter according to any one of claims 1 to 5, wherein

the film molding machine is provided with an extruder, a casting device, an MD stretcher, a TD stretcher and a winder,
the molding condition parameter includes at least one of a feeder supply amount in the extruder, rpm in the extruder, rotational speed in the extruder, the degree of opening of a lip of a die in the extruder, rpm in the casting device, rotational speed in the casting device, rpm in the MD stretcher, rotational speed in the MD stretcher, speed of a line in the TD stretcher, temperature in the TD stretcher, pressure in the TD stretcher, air volume in the TD stretcher, and air speed in the TD stretcher.

7. The method for estimating a molding condition parameter according to any one of claims 1 to 6, wherein

the film molding machine is provided with an extruder, a casting device, an MD stretcher, a TD stretcher and a winder, and
the detection data includes a physical quantity associated with the extruder, a physical quantity associated with the casting device, a physical quantity associated with the MD stretcher, a physical quantity associated with the TD stretcher or a physical quantity associated with the winder.

8. The method for estimating a molding condition parameter according to any one of claims 1 to 7, wherein

the film molding machine is provided with an extruder, a casting device, an MD stretcher, a TD stretcher and a winder, and
the detection data includes at least one of acceleration in the extruder, resin viscosity in the extruder, acceleration in the casting device, a gel count on a film in the casting device, acceleration in the MD stretcher, acceleration in the TD stretcher, air speed in the TD stretcher, air volume in the TD stretcher, distortion of a film gripper in the TD stretcher, a phase difference between a pair of left and right film grippers in the TD stretcher, a crystal orientation degree in the TD stretcher, a gel count on a film in the TD stretcher and a charge amount on a film in the winder.

9. The method for estimating a molding condition parameter according to any one of claims 1 to 8, wherein the detection data selected from a plurality of types of pre-set detection data is input to the estimation model.

10. The method for estimating a molding condition parameter according to any one of claims 1 to 9, further comprising:

preparing a plurality of types of estimation models generated by different algorithms; and
selecting one of the plurality of types of estimation models depending on a type of the film molding machine.

11. A computer program causing a computer to execute processing of:

acquiring detection data related to a state of a film molding machine detected by a detector; and
estimating a molding condition parameter in the film molding machine by inputting the acquired detection data to an estimation model, the estimation model estimating a molding condition parameter in a film molding machine in a case where detection data related to a state of the film molding machine is input.

12. An estimation device, comprising:

an acquisition unit that acquires detection data related to a state of a film molding machine detected by a detector; and

an estimation unit that estimates a molding condition parameter in the film molding machine by inputting the acquired detection data to an estimation model, the estimation model estimating a molding condition parameter in a film molding machine in a case where detection data related to a state of the film molding machine is input.

13. An estimation system, comprising:

a film molding machine;
a detector; and
an estimation device, wherein
the estimation device comprises
an acquisition unit that acquires detection data related to a state of a film molding machine detected by the detector, and
an estimation unit that estimates a molding condition parameter in the film molding machine by inputting the acquired detection data to an estimation model, the estimation model estimating a molding condition parameter in a film molding machine in a case where detection data related to a state of the film molding machine is input.

FIG.1

# FIG.2

EP 4 751 879 A1

FIG.3

FIG.4

421

| Data ID | Machine ID | Date and Time | Operation Data | Detection Data |
|---------|-----------|---------------|----------------|----------------|
| 1 | *** | *** | *** | *** |
| 2 | *** | *** | *** | *** |
| ... | ... | ... | ... | ... |

# FIG.5

State quantitie

   Molding information
     Detection data 1
     Detection data 2
       ⋮

     Operation data 1
     Operation data 2
       ⋮

Target quality

Quality data

422

Estimation Model

→ Value of molding condition parameter$X1$ in state s

→ Value of molding condition parameter$X2$ in state s
           ⋮

→ Value of molding condition parameter$X3$ in state s

FIG.6

```
                    ┌─────────────┐
                    │    Start    │
                    └──────┬──────┘
                           │          S11
          ┌────────────────┴────────────────┐
          │   Acquire and store detection    │
          │    data and operation data       │
          └────────────────┬────────────────┘
                           │          S12
          ┌────────────────┴────────────────┐
          │     Input detection data and     │
          │  operation data to estimation    │
          │              model               │
          └────────────────┬────────────────┘
                           │          S13
          ┌────────────────┴────────────────┐
          │     Acquire molding condition    │
          │            parameter             │
          └────────────────┬────────────────┘
                           │          S14
          ┌────────────────┴────────────────┐
          │   Transmit molding condition     │
          │            parameter             │
          └────────────────┬────────────────┘
                           │
                    ┌──────┴──────┐
                    │     End     │
                    └─────────────┘
```

FIG.7

```
                    ┌──────────┐
                    │  Start   │
                    └────┬─────┘
                         │            S21
        ┌────────────────┴────────────────┐
        │  Acquire and store detection data, │
        │   operation data and machine ID    │
        └────────────────┬────────────────┘
                         │            S22
        ┌────────────────┴────────────────┐
        │      Select estimation model      │
        └────────────────┬────────────────┘
                         │
                         │
                      To S12
```

## INTERNATIONAL SEARCH REPORT

| International application No. |
| --- |
| **PCT/JP2024/014219** |

**A. CLASSIFICATION OF SUBJECT MATTER**

***B29C 55/14***(2006.01)i; ***B29C 48/08***(2019.01)i; ***B29C 48/92***(2019.01)i
FI: B29C55/14; B29C48/08; B29C48/92

According to International Patent Classification (IPC) or to both national classification and IPC

**B. FIELDS SEARCHED**

Minimum documentation searched (classification system followed by classification symbols)

B29C55/14; B29C48/08; B29C48/92

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-203453 A (SEKISUI CHEMICAL CO., LTD.) 24 December 2020 (2020-12-24) paragraphs [0012]-[0081], fig. 1, 3, 4 | 1-13 |
| A | JP 1-275123 A (SEKISUI CHEMICAL CO., LTD.) 02 November 1989 (1989-11-02) p. 3, upper right column, lines 2-19, fig. 1, 3 | 1-13 |
| A | JP 2019-524485 A (BRÜCKNER MASCHINENBAU GMBH & CO. KG) 05 September 2019 (2019-09-05) paragraph [0002], claim 1 | 1-13 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 May 2024** | **28 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/014219**

| Patent document cited in search report | | | Publication date (day/month/year) | Patent family member(s) | | | Publication date (day/month/year) |
|---|---|---|---|---|---|---|---|
| JP | 2020-203453 | A | 24 December 2020 | (Family: none) | | | |
| JP | 1-275123 | A | 02 November 1989 | (Family: none) | | | |
| JP | 2019-524485 | A | 05 September 2019 | WO | 2018/001852 | A1 | |
| | | | | CN | 109311211 | A | |
| | | | | KR 10-2019-0026824 | | A | |

Form PCT/ISA/210 (patent family annex) (July 2022)

**REFERENCES CITED IN THE DESCRIPTION**

**Patent documents cited in the description**

- JP 2017030152 A